# EUROPEAN PATENT SPECIFICATION

(11) **EP 1 935 724 B1**
(45) Date of publication and mention of the grant of the patent: **07.04.2010**
(21) Application number: 07123329.0
(22) Date of filing: 17.12.2007
(51) Int. Cl.: B60R 19/56

(54) **Front underrun protection device of extended type for industrial or commercial vehicle**
Erweiterte Frontunterfahrschutzvorrichtung für Nutz- oder Geschäftsfahrzeuge
Dispositif de protection contre l'encastrement avant de type étendu pour véhicule industriel ou commercial

(30) Priority: 19.12.2006 IT MI20062431
(43) Date of publication of application: 25.06.2008
(73) Proprietor: IVECO S.p.A., 10156 Torino (IT)
(72) Inventor: Consano, Ludovico, 10023 Chieri (IT); Cordua, Giuseppe, 10129 Torino (IT); Luera, Andrea, 10024 Moncalieri (IT)
(74) Representative: Borsano, Corrado

(56) References cited:
- EP-A2- 0 591 721
- WO-A-98/41423
- WO-A-03/051670
- WO-A-2006/027689

## Description

The present invention relates to the field of safety devices for vehicles, and more specifically to a front underrun protection device of extended type for industrial or commercial vehicle.

Different types of needs emerge to guarantee adequate safety conditions in industrial or commercial vehicles, to minimize the consequences of frontal impacts.

Firstly, there is the need to fulfil the function of front underrun protection to absorb energy in truck-to-car crashes, and to prevent the front part of the car from underrunning the vehicle cab.

Moreover, there is the need to absorb energy to preserve the structural integrity of the cab and decrease stresses on the occupants in the case of frontal impact of the vehicle with another heavy vehicle, in particular truck-to-trailer crashes.

A further need is to avoid equipping the vehicle with cumbersome external safety devices which would have a negative influence on its aesthetics.

Different types of safety device to be fitted to the outside of the vehicle are known in the art.

For example, the patent US-A-6467822 describes an energy absorbing structure to be fitted to the front part of a vehicle, in a partially internal position, suitable to prevent the legs of a pedestrian from being trapped under the vehicle following a vehicle-pedestrian collision.

The patent EP-A-1433663 also describes a device of the same type as the previous patent, with the additional feature of being made of plastic, and of integrating some components of the vehicle therewithin; there is also provided a shock absorber made of foamed material.

WO 981 41 423, which is considered as the closest prior art, discloses an underrun protection device for an industrial or commercial vehicle comprising an impact element connected to the vehicle frame via energy-absorbing elements with weakened areas to facilitate controlled energy absorbtion driving impact.

However, these devices of known type do not guarantee compliance with all the needs described above, and thus have incomplete and non-optimized structures.

Therefore, the object of the present invention is to overcome all the aforesaid drawbacks and indicate a front underrun protection device of extended type for industrial or commercial vehicle, suitable to perform different functions: energy absorber to fulfil the function of underrun protection in truck-to-car frontal impacts; energy absorber / load distributor to preserve the structural integrity of the cab and to decrease stresses on the occupants in the case of truck-to-trailer frontal impact; also suitable to be integrated into the vehicle to avoid having a negative influence on the aesthetics of the vehicle itself.

The object of the present invention is a front underrun protection device for industrial or commercial vehicle, characterized in that it is positioned behind the front wall of the vehicle cab, and comprises: two beams having an H-section, extending substantially vertical and parallel, said two beams being divided into: an upper part, tending to narrow centrally in transverse direction; a central part, essentially vertical, and a lower part, tending to retrocede towards the inside of the vehicle; parallel crossbars, connecting said two upper parts of the beams; plates for rigid fixing of the underrun protection device to the chassis of the vehicle, connected in a position behind said central part of said beams; a horizontal crossbeam, of the FUPS type, fixed at the front in said lower part of the beams; connecting brackets for connecting the horizontal crossbeam to the chassis of the vehicle.

A particular object of the present invention is a front underrun protection device of extended type for industrial or commercial vehicle, as better described in the claims which form an integral part of the present description.

Further objects and advantages of the present invention will be apparent from the following detailed description of an example of embodiment of the invention and from the accompanying drawings provided purely by way of a non-limiting example, wherein:
Figures 1 to 4 show the front underrun protection device forming the object of the present invention in front, rear, exploded and side views respectively;
Figures 5 and 6 show the front underrun protection device as installed on an industrial vehicle, in a position behind the front wall of the vehicle cab, in conditions with the cab in the normal position and tilted respectively.

The same reference numerals and letters in the figures identify the same elements or components.

The front underrun protection device of extended type forming the object of the invention comprises an upper part characterized by an extension composed entirely of "rigid" elements, the energy absorption of which, in the case of impact in the upper part of the vehicle, is essentially linked to bending of said extension and to transmission of load therefrom to the chassis of the vehicle.

The extension comprises two beams having an H-section which, as will be seen below, are shaped to allow tilting of the vehicle cab and so that they do not excessively cover the surface of the radiator.

The H-beams have a very high thickness, so as to confer high flexural rigidity to the structure and transfer the greatest possible load to the chassis.

In order to optimize the rigidity and energy absorption of the device, crossbars are also provided for connecting the two H-beams, the purpose of which is to limit torsion of the sections of the H-beams. These crossbars are removable so as to facilitate access to the radiators. The H-beams then extend to the lower part of the vehicle, acting as a support for the lower structure.

The device comprises a lower part designed to absorb energy during truck-to-car crash. Nonetheless, it also contributes towards absorbing energy in the case of truck-to-trailer crash, due to a lever pattern having the H-beams as arms of the lever and the fastening point of the device to the front part of the chassis as fulcrum.

The device is structured as a single frontal module to be fixed to the front part of the chassis, by means of specific rigid plates, behind the front wall of the cab, in front of the radiator. The device has a longitudinal dimension (thickness of the device) of approximately 100 mm.

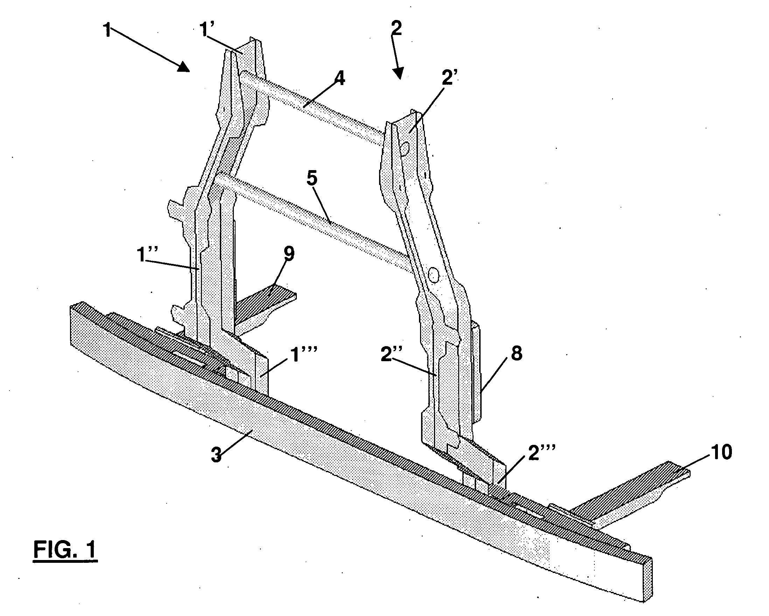

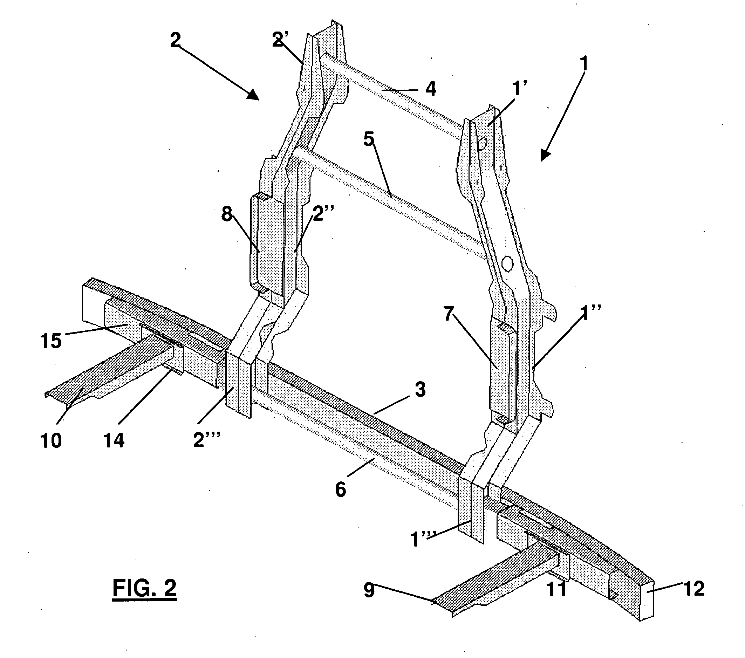

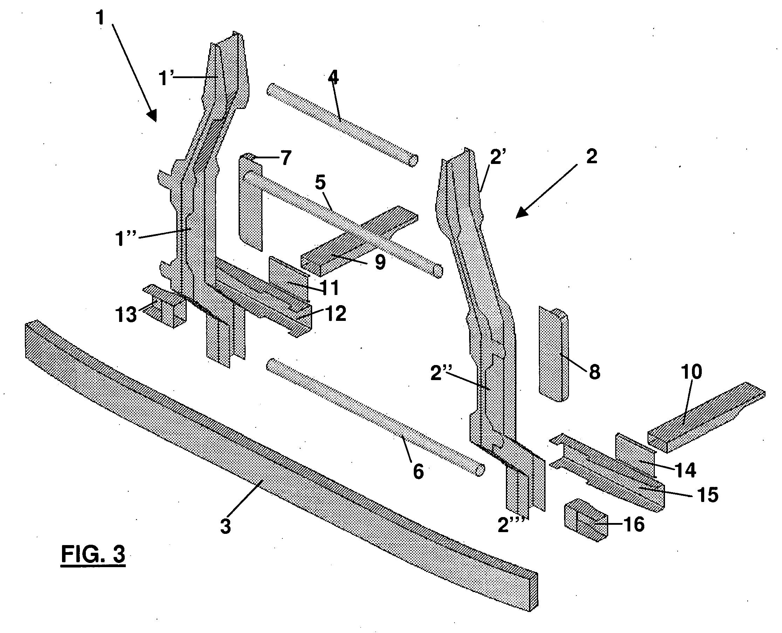

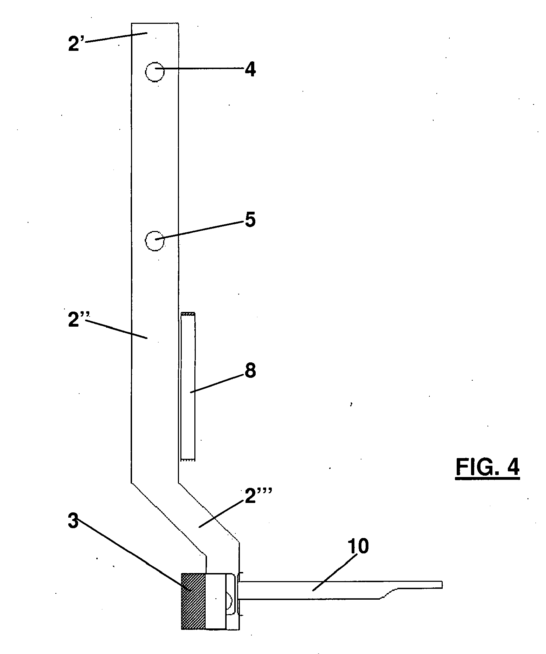

More specifically, with reference to Figures 1-4 attached, these show two beams 1 and 2 having an H-section, extending substantially vertical and parallel, with the two flanges of the H-section in a front and rear position respectively and the central part longitudinal with respect to the vehicle.

The two H-beams can be indicated as divided in three parts. An upper part 1', 2', tending to narrow centrally in transverse direction; a central part 1 ", 2", essentially vertical, and a lower part 1"', 2"', tending to retrocede towards the inside of the vehicle.

A typical dimension of the longitudinal central part of the H-section is approximately 10 cm.

There are provided two parallel crossbars 4, and 5, connecting the two upper parts 1', 2' of the beams, positioned substantially in horizontal direction. The two bars 4 and 5 are removable, so as to facilitate access to the part behind, where the radiator is located.

In a position behind the central part 1" and 2" of the two beams, two fixing plates 7 and 8 are connected by welding for a rigid fixing of the underrun protection device to the front ends of the side-members of the vehicle chassis.

In the lower part 1"' and 2'" of the beams, there is provided a horizontal crossbeam 3, of the FUPS (Front Underrun Protection System) type, fixed at the front by welding. The crossbeam 3 comprises a central part between the two beams and two external side parts. Connected to the latter are two connecting brackets 9 and 10 for connecting the crossbeam to the vehicle chassis, by means of reinforcing and connecting elements, respectively indicated with the numeral references 11, 12 and 13 for the bracket 9, and with the numeral references 14, 15 and 16 for the bracket 10.

Positioned behind the crossbeam 3 there is provided a crossbar 6 for connecting the two beams.

The material with which the various parts of the device are constructed can, for example, be steel of the type FeE420.

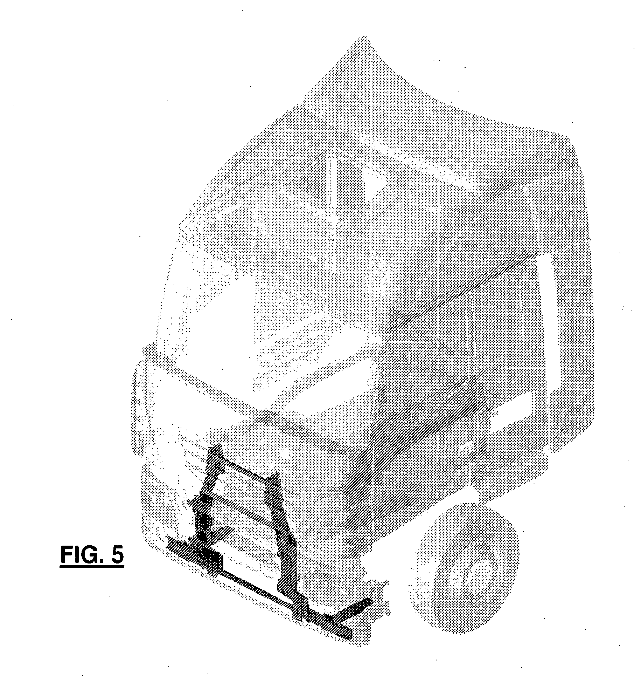

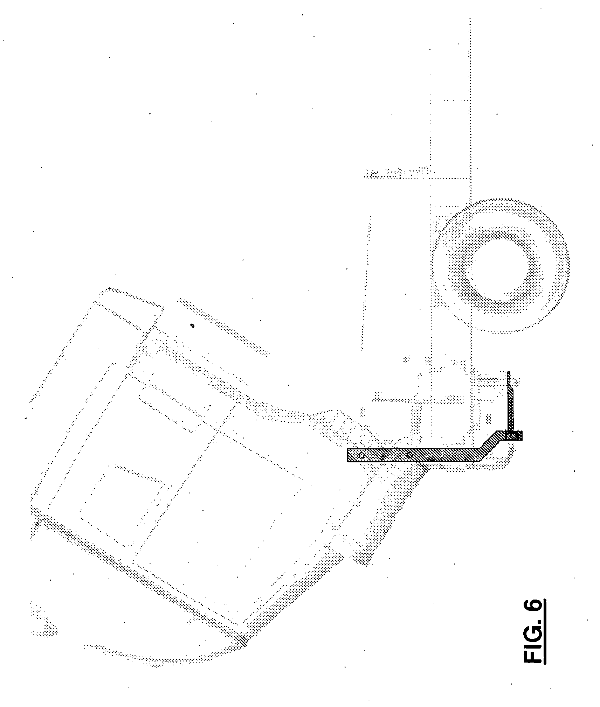

In Figures 5 and 6 it can be seen that the device forming the object of the invention is positioned behind the front part of the vehicle cab, in front of some components, such as the radiator. It is positioned so that it does not obstruct tilting of the cab, which can take place in the known manner.

Alternative embodiments of the non-limiting example are possible, without however departing from the scope of protection of the present invention, comprising all equivalent embodiments for a person skilled in the art.

The advantages deriving from application of the present invention are apparent.

All in all, the new device allows legal requirements to be met with regard to the lower part and guarantees considerable reduction in deformations and accelerations in the cab, thereby considerably improving the protection of the occupants for the type of impact cited above.

From the description given above those skilled in the art are able to produce the object of the invention without introducing further constructional details.

## Claims

1. Front underrun protection device for industrial or commercial vehicle, **characterized in that** it is positioned behind the front wall of the vehicle cab, and comprises:
- two beams (1, 2) having an H-section, extending substantially vertical and parallel, said two beams being divided into: an upper part (1', 2'), tending to narrow centrally in transverse direction; a central part (1 ", 2"), essentially vertical, and a lower part (1''', 2'''), tending to retrocede towards the inside of the vehicle;
- parallel crossbars (4, 5), connecting said two upper parts (1', 2') of the beams;
- fixing plates (7, 8) for a rigid fixing of the underrun protection device to the chassis of the vehicle, said plates being connected in a position behind said central part (1 ", 2") of said beams;
- a horizontal crossbeam (3), of the FUPS type, fixed at the front in said lower part (1''', 2''') of the beams;
- connecting brackets (9, 10) for connecting the horizontal crossbeam (3) to the chassis of the vehicle.

2. Front underrun protection device as claimed in claim 1, **characterized in that** the two flanges of the H-section of the beams (1, 2) are in a front and rear position respectively, and the central part is longitudinal with respect to the vehicle.

3. Front underrun protection device as claimed in claim 1, **characterized in that** said crossbars (4, 5) are removable.

4. Front underrun protection device as claimed in claim 1, **characterized in that** said crossbeam (3) is fixed by welding.

5. Front underrun protection device as claimed in claim 1, **characterized in that** said connecting brackets (9, 10) for connecting the horizontal crossbeam (3) to the vehicle chassis are connected to the side parts of the crossbeam by means of reinforcing and connecting elements (11, 12, 13, 14, 15 and 16).

6. Front underrun protection device as claimed in claim 1, **characterized in that** a crossbar (6) to connect the two beams is positioned behind said crossbeam (3).

7. Front underrun protection device as claimed in claim 1, **characterized in that** said crossbars (4, 5) are positioned substantially in horizontal direction.

8. Industrial or commercial vehicle, **characterized in that** it comprises a front underrun protection device as claimed in any one of the previous claims, positioned behind the front wall of the vehicle cab.

## Patentansprüche

1. Vorder-Unterfahrschutz für ein gewerbliches oder kommerzielles Fahrzeug, **dadurch gekennzeichnet, dass** es hinter einer Vorderwand einer Fahrzeugfahrerkabine positioniert ist, und umfasst:
zwei Träger (1, 2) mit einer H-Sektion, die sich im Wesentlichen vertikal und parallel erstrecken, wobei die zwei Träger aufgeteilt sind in: einen oberen Teil (1', 2'), der sich mittig in Querrichtung zu verengen neigt, einen im Wesentlichen vertikalen, mittigen Teil (1", 2'') und einen unteren Teil (1''' , 2'''), der in Richtung des Inneren des Fahrzeugs zurückzutreten neigt,
parallele Querstangen (4, 5), welche die zwei oberen Teile (1', 2') der Träger verbinden,
Fixierplatten (7, 8) zum steifen Fixieren des Unterfahrschutzes an einen Rahmen des Fahrzeugs, wobei die Platten in einer Position hinter dem mittigen Teil (1", 2'') der Träger verbunden sind,
einen horizontalen FUPS-Querträger (3), der an der Vorderseite des unteren Teils (1''', 2''') der Träger fixiert ist,
Verbindungsgabeln (9, 10) zum Verbinden der horizontalen Querträger (3) mit dem Rahmen des Fahrzeugs.

2. Vorder-Unterfahrschutz gemäß Anspruch 1, **dadurch gekennzeichnet, dass** die zwei Flansche der H-Sektion der Träger (1, 2) entsprechend an einer Vorder- oder Rückposition befindlich sind, und sich der mittige Teil längs zum Fahrzeug befindet.

3. Vorder-Unterfahrschutz gemäß Anspruch 1, **dadurch gekennzeichnet, dass** die Querstangen (4, 5) abnehmbar sind.

4. Vorder-Unterfahrschutz gemäß Anspruch 1, **dadurch gekennzeichnet, dass** der Querträger (3) durch Schweißen fixiert ist.

5. Vorder-Unterfahrschutz gemäß Anspruch 1, **dadurch gekennzeichnet, dass** die Verbindungsgabeln (9, 10) zum Verbinden des horizontalen Querträgers (3) mit dem Fahrzeugrahmen mittels Verstärkungs- und Verbindungselementen (11, 12, 13, 14, 15 und 16) mit den Seitenteilen des Querträgers verbunden sind.

6. Vorder-Unterfahrschutz gemäß Anspruch 1, **dadurch gekennzeichnet, dass** eine Querstange (6) zum Verbinden der zwei Träger hinter dem Querträger (3) positioniert ist.

7. Vorder-Unterfahrschutz gemäß Anspruch 1, **dadurch gekennzeichnet, dass** die Querstangen (4, 5) im Wesentlichen in einer horizontalen Richtung positioniert sind.

8. Gewerbliches oder kommerzielles Fahrzeug, **dadurch gekennzeichnet, dass** es einen Vorder-Unterfahrschutz gemäß einem der vorangegangenen Ansprüche umfasst, der hinter einer Vorderwand der Fahrzeugfahrerkabine positioniert ist.

## Revendications

1. Dispositif de protection contre l'encastrement avant pour un véhicule industriel ou commercial, **caractérisé en ce qu'**il est positionné derrière la paroi avant de la cabine du véhicule, et comprend :
deux poutres (1, 2) ayant une section en forme de H, s'étendant sensiblement verticalement et parallèlement, lesdites deux poutres étant divisées en : une partie supérieure (1', 2') ayant tendance à se rétrécir centralement dans la direction transversale ; une partie centrale (1", 2 "), essentiellement verticale et une partie inférieure (1''', 2'''), ayant tendance à reculer vers l'intérieur du véhicule,
des traverses parallèles (4, 5) raccordant lesdites deux parties supérieures (1', 2') des poutres ;
des plaques de fixation (7, 8) pour une fixation rigide du dispositif de protection contre l'encastrement au châssis du véhicule, lesdites plaques étant raccordées dans une position derrière ladite partie centrale (1", 2") desdites poutres ;
une traverse horizontale (3) du type FUPS, fixée à l'avant de ladite partie inférieure (1''', 2''') des poutres ;
des consoles de raccordement (9, 10) pour raccorder la traverse horizontale (3) au châssis du véhicule.

2. Dispositif de protection contre l'encastrement avant selon la revendication 1, **caractérisé en ce que** les deux rebords de la section en forme de H des poutres (1, 2) sont dans une position avant et arrière respectivement, et la partie centrale est longitudinale par rapport au véhicule.

3. Dispositif de protection contre l'encastrement avant selon la revendication 1, **caractérisé en ce que** lesdites traverses (4, 5) sont amovibles.

4. Dispositif de protection contre l'encastrement avant selon la revendication 1, **caractérisé en ce que** ladite traverse (3) est fixée par soudage.

5. Dispositif de protection contre l'encastrement avant selon la revendication 1, **caractérisé en ce que** lesdites consoles de raccordement (9, 10) pour raccorder la traverse horizontale (3) au châssis du véhicule, sont raccordées à des parties latérales de la traverse au moyen d'éléments de renforcement et de raccordement (11, 12, 13, 14, 15 et 16).

6. Dispositif de protection contre l'encastrement avant selon la revendication 1, **caractérisé en ce qu'**une traverse (6) pour raccorder les deux poutres est positionnée derrière ladite traverse (3).

7. Dispositif de protection contre l'encastrement avant selon la revendication 1, **caractérisé en ce que** lesdites traverses (4, 5) sont positionnées sensiblement dans la direction horizontale.

8. Véhicule industriel ou commercial, **caractérisé en ce qu'**il comprend un dispositif de protection contre l'encastrement avant selon l'une quelconque des revendications précédentes, positionné derrière la paroi avant de la cabine du véhicule.
